# EUROPÄISCHE PATENTSCHRIFT

(11) **EP 1 452 366 B1**
(45) Veröffentlichungstag und Bekanntmachung des Hinweises auf die Patenterteilung: **15.06.2011**
(21) Anmeldenummer: 04004020.6
(22) Anmeldetag: 23.02.2004
(51) Int. Cl.: B60J 7/047, B60J 7/057, B60J 7/06, B60J 7/12, B60J 7/14

(54) **Verstelleinrichtung für ein vorderes Dachteil eines Fahrzeugs**
Adjusting device for a front roof part of a vehicle
Dispositif de réglage pour une partie de toit d'un véhicule

(30) Priorität: 25.02.2003 DE 10307844
(43) Veröffentlichungstag der Anmeldung: 01.09.2004
(73) Patentinhaber: Bayerische Motoren Werke Aktiengesellschaft, 80809 München (DE)
(72) Erfinder: Siring, Harald, 81377 München (DE); Seiferling, Erik, 81475 München (DE); Minatti, Johann, 80935 München (DE)

(56) Entgegenhaltungen:
- EP-A- 0 101 322
- WO-A-01/19633
- DE-A- 10 134 593
- DE-C- 19 804 990
- US-A- 3 713 689
- US-A- 3 720 440
- US-A- 3 994 525
- US-A- 5 558 388
- US-B1- 6 412 860

## Beschreibung

Die Erfindung betrifft eine Verstelleinrichtung für ein vorderes Dachteil eines Fahrzeugs, mit den im Oberbegriff des Patentanspruches 1 angegebenen Merkmalen.

Ein derartiges Fahrzeugdach weist gemäß der DE 101 34 593 A1 ein vorderes Dachteil auf, das aus einer Schließlage zumindest teilweise in ein Aufnahmefach in oder an einem hinteren Dachteil einzubringen ist. Das vordere Dachteil ist an seinem vorderen Bereich mit jeweils einer seitlichen Gleitschiene verbunden, die an einer Stützschiene längsverstellbar ist, die ihrerseits in einer seitlich mit dem hinteren Dachteil verbundenen Führungsschiene geführt ist. Beim Schließen des verstellbaren Fahrzeugdaches werden die seitlich gegenüberliegenden Stützschienen von einem Motorantrieb nach vorne zu dem Windlauf über der vorderen Windschutzscheibe verstellt und am Windlauf zentriert. Der Motorantrieb dürfte bei an dem Windlauf anliegenden Stützschienen exakt abzuschalten sein und die Stützschienen auch im Fahrbetrieb gegen den Windlauf belasten.

Auch aus der US-A-5 558 388 ist eine ähnliche Verstelleinrichtung bekannt.

Der Erfindung liegt die Aufgabe zu Grunde, eine Verstelleinrichtung für ein vorderes Dachteil eines Fahrzeugs mit den Merkmalen im Oberbegriff des Patentanspruches 1 anzugeben, die bei an dem Windlauf anliegender Stützschiene kein lagegenaues Abschalten des Motorantriebs erfordert.

Diese Aufgabe ist durch die im Patentanspruch 1 angegebenen Merkmale gelöst. Vorteilhafte Ausgestaltungen der Erfindung sind den Unteransprüchen entnehmbar.

Das zwischen dem Motorantrieb und der Stützschiene angeordnete Federelement ermöglicht bei an dem Windlauf anliegender Stützschiene ein weniger genaues Abschalten des Motorantriebs. Wird der Motorantrieb in der Schließlage der Stützschiene ungenau abgeschaltet, so verändert sich lediglich die Vorspannkraft des Federelements, dass dann die Stützschiene mit einer etwas anderen Kraft gegen den Windlauf belastet. Dabei ist lediglich dafür zu sorgen, dass die Vorspannkraft des Federelements ausreichend ist, um eine Rückverlagerung der Stützschiene zu verhindern, wenn das vordere Dachteil über die Gleitschienen gegenüber den Stützschienen bis in die Schließlage längsverstellbar sein soll.

Ein Ausführungsbeispiel der Erfindung wird anhand einer Zeichnung näher erläutert. Es zeigen
- Fig. 1: eine vereinfachte Seitenansicht des hinteren Fahrzeugbereiches bei geschlossenem Fahrzeugdach,
- Fig. 2: eine Fig. 1 entspechende Ansicht bei teilweise geöffnetem vorderen Dachteil,
- Fig. 3: eine Seitenansicht von der Verstelleinrichtung bei geschlossenem vorderen Dachteil,
- Fig. 4: eine Fig. 3 entsprechende Ansicht bei nahezu vollständig an den Windlauf über der vorderen Windschutzscheibe angenäherter Stützschiene und
- Fig. 5: eine den Figuren 3 und 4 entsprechende Ansicht bei etwa in Überdeckung mit der Führungsschiene zurück verlagerter Stützschiene.

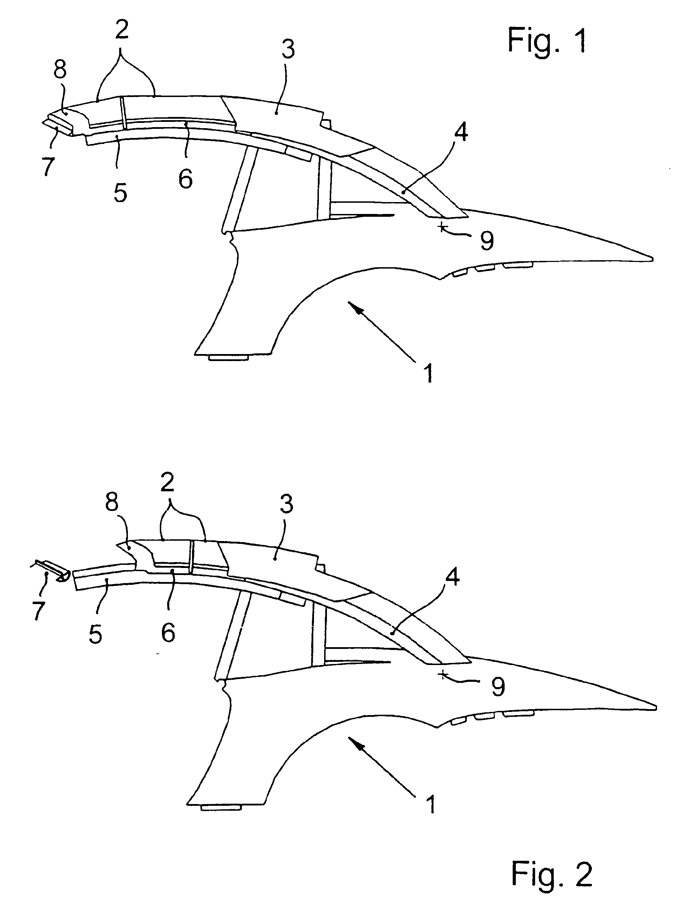

Das in Figur 1 vereinfacht und lediglich teilweise in einer hinteren Seitenansicht dargestellte Kraftfahrzeug 1 weist ein verstellbares Fahrzeugdach mit einem vorderen Dachteil 2 auf, das mit aufblasbaren Hohlkammern versehen ist. An das hintere Ende des vorderen Dachteiles 2 schließt sich ein hinteres Dachteil 3 an, in dem ein zumindest vorne offenes Aufnahmefach ausgebildet ist, in das bei evakuierten Hohlkammern das vordere Dachteil 1 von vorne einzubringen ist. Das hintere Dachteil 2 ist mit zwei seitlich gegenüber liegenden Führungsschienen 4 verbunden, die von den Seiten des hinteren Dachteiles 3 nach hinten unten verlaufen und nach oben gleichmäßig konvex gekrümmt sind. An jeder seitlichen Führungsschiene 4 ist eine Stützschiene 5 längsverstellbar angeordnet, die von einem nicht dargestellten Motorantrieb längsverstellbar ist. An der seitlichen Stützschiene 5 ist eine Gleitschiene 6 längsverstellbar angeordnet. Die Stützschiene 5 und die Gleitschiene 6 sind wie die Führungsschiene 4 gleichmäßig nach oben konvex gekrümmt ausgebildet. Beim Schließen des geöffneten Fahrzeugdaches kommt die Stützschiene 5 am Windlauf 7 über der vorderen Windschutzscheibe zur Anlage. Die vorderen Bereiche der seitlich gegenüber liegenden Gleitschienen 6 sind über eine Querstrebe 8 verbunden, an der das vordere Ende des vorderen Dachteiles 2 befestigt ist.

Vor oder beim Öffnen des Fahrzeugdaches werden die aufblasbaren Hohlkammern evakuiert und zunächst das vordere Dachteil 2, wie in Figur 2 dargestellt, vollständig oder teilweise in den Aufnahmeraum im hinteren Dachteil 3 eingebracht. Hierzu wird die Querstrebe 8 zusammen mit den daran befestigten Gleitschienen 6 auf den Stützschienen 5 entsprechend nach hinten verstellt. Das hintere Ende des vorderen Dachteiles 2 ist im Bodenbereich des Aufnahmefaches mit dem hinteren Dachteil 3 verbunden. Ist das vordere Dachteil 2 in einem vorgegebenen Maß vollständig oder teilweise in das Aufnahmefach im hinteren Dachteil 3 eingebracht, werden die am Windlauf 7 anliegenden Stützschienen 5 nach hinten etwa in vertikaler Überdeckung mit den Führungsschienen 4 verstellt. Danach kann das hintere Dachteil 3 über eine nicht dargestellte Verstellkinematik nach unten geschwenkt und gleichzeitig nach hinten verstellt werden. Hierzu ist die Führungsschiene 4 an ihrem hinteren unteren Bereich um eine Fahrzeugquerachse 9 schwenkbar und gegenüber der Fahrzeugquerachse 9 längs verstellbar angeordnet.

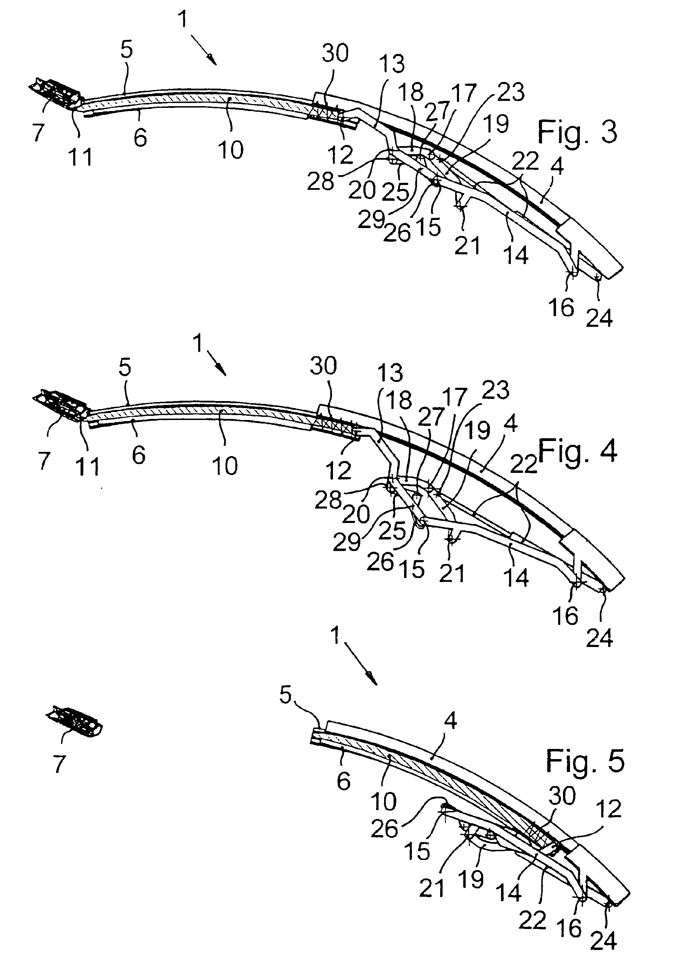

Anhand der Figuren 3 bis 5 werden nachfolgend der Motorantrieb zum motorischen Verstellen der Stützschiene 5 gegenüber der Führungsschiene 4 sowie weitere Einzelheiten der Verstelleinrichtung beschrieben.

Gemäß Figur 3 weist die Verstelleinrichtung einen in der Stützschiene 5 längsverstellbaren Zentrierbolzen 10 auf, der beim motorischen Verstellen der Stützschiene 5 zu dem oberen Windlauf 7 über der vorderen Windschutzscheibe mit seinem vorderen Ende in eine Zentrieröffnung 11 am Windlauf 7 eingreift und dadurch in der dargestellten Schließlage der Stützschiene 5 in Höhen- und Seitenrichtung zentriert ist. An dem hinteren Ende des Zentrierbolzens 10 ist um eine in Fahrzeugquerrichtung angeordnete Schwenkachse 12 schwenkbar ein Scharnierhebel 13 angelenkt, der mit einem hinteren Scharnierhebel 14 in einem Scharniergelenk 15 um eine Fahrzeugquerachse schwenkbar verbunden ist. Der hintere Scharnierhebel 14 ist an seinem nach hinten gerichteten Endbereich um eine im hinteren Bereich an der Führungsschiene 4 ausgebildeten Fahrzeugquerachse 16 schwenkbar. Der Verstellantrieb weist außerdem zwei um eine Fahrzeugquerachse 17 schwenkbar verbundene Kraftübertragungshebel 18, 19 auf, die jeweils an ihren Endbereichen um eine in Fahrzeugquerrichtung verlaufende Hebelachse 20, 21 einerseits in einem mittleren Bereich an dem Scharnierhebel 13 und andererseits in einem mittleren Bereich an dem anderen Scharnierhebel 14 angelenkt sind.

Der Motorantrieb zum motorischen Verstellen der Stützschiene 5 weist einen Hydraulikzylinder 22 auf, der über ein Gelenk 23 an dem hinteren Kraftübertragungshebel 19 und am anderen Ende um eine Achse 24 schwenkbar an der Karosserie des Fahrzeugs angelenkt ist. In der Schließlage der Stützschiene 5 liegen alle Gelenkachsen der beiden Scharnierhebel 13, 14 etwa auf einer ideellen Verbindungsgeraden und sind dadurch in eine Totpunktlage gebracht. In der Schließlage der Stützschiene 5 sind die beiden Scharnierhebel 13, 14 in ihrer Totpunktlage von einer Sicherungseinrichtung festgehalten und der Hydraulikzylinder 22 drucklos geschaltet. Die Sicherungseinrichtung weist einen Übertragungshebel 25 und einen Sicherungshebel 26 auf, die über dem vorderen Scharnierhebel 13 um eine Fahrzeugquerachse 27 schwenkbar verbunden sind. Der Übertragungshebel 25 ist an seinem freien Ende an einem Fortsatz 28 des vorderen Kraftübertragungshebels 18 angelenkt, der von der Anlenkstelle 20 des vorderen Kraftübertragungshebels 18 am vorderen Scharnierhebel 13 nach unten absteht. Der Sicherungshebel 26 ist an seinem mittleren Bereich um eine in Fahrzeugquerrichtung verlaufende Schwenkachse 29 vor dem Scharniergelenk 15 an dem vorderen Scharnierhebel 13 angelenkt. Der Sicherungshebel 26 untergreift in der Schließlage der Stützschiene 5 mit seinem nach hinten unten vorstehenden Endbereich das Scharniergelenk 15 und sichert oder stützt es von unten. Dadurch ist die Totpunktlage der Scharnierhebel 13, 14 auch dann gesichert, wenn in der Schließlage der Stützschiene 5 der Hydraulikzylinder 22 drucklos ist.

Den Figuren 3 bis 5 ist entnehmbar, dass zwischen einer Anlagefläche am vorderen Ende des vorderen Scharnierhebels 13 und der Stützschiene 5 eine bei zurück verlagerter Stützschiene 5 spannungslose oder vorgespannte Druckfeder 30 angeordnet ist, die bei einer Verstellbewegung der Stützschiene 5 nach vorne eine Kraftübertragung von dem vorderen Scharnierhebel 13 auf die Stützschiene 5 bewirkt. Nach dem Anliegen der Stützschiene 5 an dem Windlauf 7 über der vorderen Windschutzscheibe wird bis zum vollständigen Erreichen der Schließlage die Druckfeder 30 vorgespannt oder weiter vorgespannt, wodurch die Stützschiene 5 auch im Fahrbetrieb sicher an dem Windlauf 7 anliegt. In den Figuren ist nicht erkennbar, dass die Stützschiene 5 von Anschlägen begrenzt gegenüber dem Zentrierbolzen 10 verstellbar ist. Bei einer durch den Hydraulikzylinder 22 bewirkten Rückverlagerung der Stützschiene 5 aus ihrer Schließlage kommt ein Anschlag an dem Zentrierbolzen 10 an einem Gegenanschlag an der Stützschiene 5 zur Anlage und bewirkt nachfolgend eine erzwungene Mitnahme der Stützschiene 5 mit dem Zentrierbolzen 10, wenn der Zentrierbolzen 10 weiter nach hinten verstellt wird. Bei der Rückverlagerung des Zentrierbolzens 10 gelangen die beiden Scharnierhebel 13, 14 in die in Figur 4 dargestellte Untertotpunktlage, wobei zuvor der Sicherungshebel 26 durch die Verstellkinematik bedingt von dem Scharniergelenk 15 nach unten weg verstellt wird.

Beim Einbringen des vorderen Dachteiles 2 in das Aufnahmefach im hinteren Dachteil 3, wird die mit dem vorderen Dachteil 2 verbundene Gleitschiene 6 über einen eigenen Antrieb auf der Stützschiene 5 nach hinten verstellt und dabei die Stützschiene 5 etwa in vertikaler Überdeckung mit der Führungsschiene 4 gebracht. Anschließend kann das hintere Dachteil 3 nach unten und hinten in eine Figur 5 entsprechende Offenlage des Fahrzeugdaches verstellt werden. Bei dieser Öffnungsbewegung wird die Führungsschiene 4 um den ortsfesten Bolzen 16 geschwenkt und gegenüber dem Bolzen 16 nach hinten verstellt.

Bei dem Ausführungsbeispiel liegen in der Schließlage der Stützschiene alle Gelenkachsen der beiden Scharnierhebel etwa auf einer ideellen Verbindungsgeraden und sind dadurch in eine Totpunktlage gebracht. Ebenso können in der Schließlage der Stützschiene alle Gelenkachsen der beiden Scharnierhebel etwas über die beschriebene Totpunktlage hinaus in eine Übertotpunktlage der Scharnierhebel verstellt werden, in der die ideellen Verbindungsgeraden jeweils zwischen den Gelenkachsen der Scharnierhebel nach unten einen stumpfen Winkel zueinander einschließen. Zum motorischen Verstellen der Stützschiene und gegebenenfalls des Zentrierbolzens kann eine beliebige hydraulische, elektrische, pneumatische oder sonstige Antriebseinrichtung vorgesehen sein. Beim Öffnen des Fahrzeugdaches können die seitliche Führungsschiene und damit das hintere Dachteil auch nach vorne in eine gewünschte Lage verstellt werden. Die Kraftübertragungshebel können auch entfallen, wenn der Hydraulikzylinder oder ein anderes Element einer motorischen Antriebseinrichtung an einem Scharnierhebel oder an einem anderen mit einem Scharnierhebel verbundenen Teil angreift. Das vordere Dachteil und/oder andere Teile des Fahrzeugdaches können durch feste oder faltbare, beispielsweise mit aufblasbaren Hohlkammern versehene Dachteile gebildet sein. An Stelle der bei dem Ausführungsbeispiel verwendeten Scharnierhebel können auch andere Teile vorgesehen sein, die von einem Motorantrieb verstellbar sind. Das hintere Dachteil kann feststehend oder verstellbar angeordnet und beispielsweise von einem mittleren Dachteil gebildet sein.

## Patentansprüche

1. Verstelleinrichtung für ein vorderes Dachteil (2) eines Fahrzeugs (1), das aus einer Schließlage zumindest teilweise in ein Aufnahmefach in oder an einem hinteren Dachteil (3) einzubringen ist und jeweils seitlich mit einer Gleitschiene (6) verbunden ist, die an einer Stützschiene (5) längsverstellbar angeordnet ist, die in einer seitlich mit dem hinteren Dachteil (3) verbundenen Führungsschiene (4) geführt und von einem Motorantrieb gegenüber der Führungsschiene (4) verschiebbar ist, **dadurch gekennzeichnet, dass** der Motorantrieb die Stützschiene (5) über ein Federelement (30) zu einem Windlauf (7) über der vorderen Windschutzscheibe des Fahrzeugs verstellt und bei an dem Windlauf (7) anliegender Stützschiene (5) in dem Federelement (30) eine die Stützschiene (5) zu dem Windlauf (7) belastende Spannkraft bewirkt.

2. Verstelleinrichtung nach Anspruch 1, **dadurch gekennzeichnet, dass** in der Stützschiene (5) ein Zentrierbolzen (10) geführt ist, der bei der Annäherung der Stützschiene (5) an den Windlauf (7) von dem Motorantrieb von hinten in eine Zentrieröffnung (11) am Windlauf (7) einzuführen ist, wodurch der Zentrierbolzen (10) am Windlauf (7) in Höhen- und Seitenrichtung des Fahrzeugs (1) zentriert wird.

3. Verstelleinrichtung nach Anspruch 1 oder 2, **dadurch gekennzeichnet, dass** der Motorantrieb zwei in einem Scharniergelenk (15) verbundene Scharnierhebel (13, 14) aufweist, von denen ein Scharnierhebel (14) an seinem vom Scharniergelenk (15) nach hinten gerichteten Endbereich um eine im hinteren Bereich an der Führungsschiene (4) ausgebildete Fahrzeugquerachse (16) und der andere Scharnierhebel (13) an seinem vom Scharniergelenk (15) nach vorne gerichteten Endbereich um eine Schwenkachse (12) schwenkbar mit dem hinteren Bereich des Zentrierbolzens (10) verbunden ist und die Achse des Scharniergelenks (15) und die Schwenkachse (12) parallel zur Fahrzeugquerachse (16) verlaufen.

4. Verstelleinrichtung nach Anspruch 3, **dadurch gekennzeichnet, dass** der Motorantrieb zwei um eine Fahrzeugquerachse (17) schwenkbar verbundene Kraftübertragungshebel (18, 19) aufweist, die jeweils an ihren Endbereichen um eine in Fahrzeugquerrichtung verlaufende Hebelachse (20, 21) einerseits in einem mittleren Bereich an einem (13) der zwei Scharnierhebel (13, 14) und andererseits in einem mittleren Bereich an dem anderen (14) der zwei Scharnierhebel (13, 14) angelenkt sind.

5. Verstelleinrichtung nach Anspruch 4, **dadurch gekennzeichnet, dass** kurz vor dem Erreichen der Schließlage der Stützschiene (5) die ideellen Verbindungsgeraden zwischen den Gelenkachsen (12, 15 bzw. 15, 16) der beiden Scharnierhebel (13, 14) nach oben und gegebenenfalls die ideellen Verbindungsgeraden zwischen den Gelenkachsen (17, 20 bzw. 17, 21) der beiden Kraftübertragungshebel (18, 19) nach unten jeweils in einem stumpfen Winkel zueinander angeordnet sind.

6. Verstelleinrichtung nach einem der Ansprüche 4 oder 5, **dadurch gekennzeichnet, dass** in der Schließlage der Stützschiene (5) die Gelenkachsen (12, 15 bzw. 15, 16) der beiden Scharnierhebel (13, 14) etwa auf einer ideellen Verbindungsgeraden zwischen allen Gelenkachsen (12, 15, 16) der Scharnierhebel (13, 14) in einer Totpunktlage angeordnet sind oder etwas darüber hinaus in eine Übertotpunktlage verstellt sind, in der die Verbindungsgeraden zwischen den Gelenkachsen der Scharnierhebel nach unten einen stumpfen Winkel einschließen, und gegebenenfalls die ideellen Verbindungsgeraden zwischen den Gelenkachsen (17, 20 bzw. 17, 21) der Kraftübertragungshebel (18, 19) nach unten einen stumpfen Winkel einschließen.

7. Verstelleinrichtung nach einem der Ansprüche 4 bis 6, **dadurch gekennzeichnet, dass** in der Schließlage der Stützschiene (5) ein Anschlag an einem der zwei Scharnierhebel (13; 14) oder gegebenenfalls einem der zwei Kraftübertragungshebel (18; 19) an einem Gegenanschlag an dem anderen der zwei Scharnierhebel (14; 13) oder gegebenenfalls dem anderen der zwei Kraftübertragungshebel (19; 18) oder an einem ortsfesten oder verstellbaren Teil anliegt.

8. Verstelleinrichtung nach einem der Ansprüche 6 oder 7 mit Rückbezug auf Anspruch 6, **dadurch gekennzeichnet, dass** in der Schließlage der Stützschiene (5) eine Sicherungseinrichtung die Scharnierhebel (13, 14) in ihrer Totpunktlage bzw. Übertotpunktlage festhält.

9. Verstelleinrichtung nach Anspruch 8, **dadurch gekennzeichnet, dass** die Sicherungseinrichtung einen Übertragungshebel (25) und einen Sicherungshebel (26) aufweist, die über dem vorderen Scharnierhebel (13) um eine Fahrzeugquerachse (27) schwenkbar verbunden sind und der Übertragungshebel (25) an seinem freien Ende an einem Fortsatz (28) des vorderen Kraftübertragungshebels (18) angelenkt ist, der von der den vorderen Kraftübertragungshebel (18) mit dem vorderen Scharnierhebel (13) verbindenden Hebelachse (20) nach unten absteht.

10. Verstelleinrichtung nach Anspruch 9, **dadurch gekennzeichnet, dass** der Sicherungshebel (26) an seinem mittleren Bereich um eine in Fahrzeugquerrichtung verlaufende Schwenkachse (29) vor dem Scharniergelenk (15) an dem vorderen Scharnierhebel (13) angelenkt ist und mit seinem nach hinten unten vorstehenden Endbereich in der Schließlage des vorderen Dachteiles (2) das Scharniergelenk (15) untergreift und **dadurch** eine Verstellbewegung des Scharniergelenks (15) nach unten verhindert, wenn der Motorantrieb abgeschaltet ist.

11. Verstelleinrichtung nach einem der Ansprüche 2 bis 10, **dadurch gekennzeichnet, dass** die Stützschiene (5) von Anschlägen begrenzt gegenüber dem Zentrierbolzen (10) verstellbar ist.

## Claims

1. A device for adjusting a front roof part (2) of a vehicle (1) so as to move it at least partly from a closed position into a receiving compartment in or on a rear roof part (3), the device being connected at each side to a slide rail (6) longitudinally on a supporting rail (5) which is guided on a guide rail (4) laterally connected to the rear roof part (3) and is movable relative to the guide rail (4) by a power drive, **characterised in that** the power drive moves the supporting rail via a spring element (30) towards an apron (7) above the front windscreen of the vehicle and when the support rail (5) adjoins the apron (7), the power drive generates a clamping force in the spring element (30) biasing the support rail (5) towards the apron (7).

2. A device according to claim 1, **characterised in that** a centring pin (10) is guided in the support rail (5) and when the support rail (5) approaches the apron (7) the power drive inserts the centring pin from the rear into a centring opening (11) on the apron (7), with the result that the centring pin (10) is centred on the apron (7) in the vertical and lateral direction of the vehicle (1).

3. A device according to claim 1 or claim 2, **characterised in that** the power drive comprises two levers (13, 14) connected by a hinge (15), the end region of one lever (14) extending backwards from the hinge (15) being pivotable around a transverse axis (16) of the vehicle situated in the rear region on the guide rail (4) and the end region of the other lever (13) extending forwards from the hinge (15) is connected to the rear region of the centring pin (10) so as to be pivotable around an axis (12), and the axis of the hinge (15) and the axis (12) extend parallel to the transverse axis (16) of the vehicle.

4. A device according to claim 3, **characterised in that** the power drive comprises two force-transmitting levers (18, 19) pivotably connected around a transverse axis (17) of the vehicle, the end regions of each lever (18, 19) being pivoted around an axis (20, 21) extending in the transverse direction of the vehicle, on the one hand in a central region on one (13) of the two hinge levers (13, 14) and on the other hand in a central region on the other (14) of the two hinge levers (13, 14).

5. An adjusting device according to claim 4, **characterised in that** shortly before the supporting rail (5) reaches the closing position, the imaginary connecting lines between the axes (12, 15 or 15, 16) of the two levers (13, 14) are disposed at an acute angle to one another in the upward direction and, if required, the imaginary connecting lines between the axes (17, 20 or 17, 21) or the two force-transmitting levers (18, 19) are disposed at an obtuse angle to one another in the downward direction.

6. An adjusting device according to claim 4 or claim 5, **characterised in that** when the supporting rail (5) is in the closed position the axes (12, 15 or 15, 16) of the two hinge levers (13, 14) are disposed at a dead-centre position approximately on an imaginary connecting line between all the axes (12, 15, 16) of the levers (13, 14) or are moved upwards into a position above the dead-centre position in which the connecting lines between the axes of the hinge levers include an obtuse angle downwards and, if required, the imaginary connecting lines between the axes (17, 20 or 17, 21) of the force-transmitting levers (18, 19) include an obtuse angle downwards.

7. A device according to any of claims 4 to 6, **characterised in that** when the support rail (5) is in the closed position a stop of one of the two levers (13; 14) or if required on one of the two force-transmitting levers (18; 19) comes against a mating stop on the other of the two levers (14; 13) or if required on the other of the two force-transmitting levers (19; 18) or on a stationary or adjustable part.

8. A device according to claim 6 or claim 7, in dependence on claim 6, **characterised in that** when the support rail (5) is in the closed position a safety device holds the levers (13, 14) in or above their dead-centre position.

9. A device according to claim 8, **characterised in that** the safety device comprises a transmission lever (25) and a safety lever (26), pivotably connected around a transverse axis (27) of the vehicle via the front lever (13), and the free end of the transmission lever (25) is pivoted to a prolongation (28) of the front force-transmitting lever (18), the prolongation (28) extending downwards from the axis (20) connecting the front force-transmitting lever (18) to the front lever (13).

10. A device according to claim 9, **characterised in that** the central region of the safety lever (26) is connected to the front lever (13) so as to be pivotable around an axis (29) in the transverse direction of the vehicle in front of the hinge (15), and its backwardly and downwardly projecting end region extends under the hinge (15) when the front roof part (2) is in the closed position, thus preventing the hinge (15) from moving downwards when the power drive is switched off.

11. A device according to any of claims 2 to 10, **characterised in that** the support rail (5) is adjustable relative to the centring pin (10) to an extent limited by stops.

## Revendications

1. Installation d'actionnement de la partie avant (2) d'un toit de véhicule (1) pour la conduire d'une position de fermeture, au moins en partie dans un compartiment dans ou sur la partie arrière de toit (3), en étant reliée de chaque côté à un rail de coulissement (6) installé de manière réglée longitudinalement sur un rail d'appui (5) lui-même guidé dans un rail de guidage (4) relié latéralement à la partie arrière de toit (3), en étant entraîné par rapport au rail de guidage (4) par un entraînement à moteur,
installation **caractérisée en ce que**
l'entraînement à moteur déplace le rail d'appui (5) par l'intermédiaire d'un élément à ressort (30) par rapport à un déflecteur (7) sur le pare-brise du véhicule et lorsque le rail d'appui (5) est appliqué contre le déflecteur (7), il produit dans l'élément de ressort (30) une force de serrage sollicitant le rail d'appui (5) vers le déflecteur (7).

2. Installation d'actionnement selon la revendication 1,
**caractérisée en ce que**
le rail d'appui (5) guide un goujon de centrage (10) qui, lors du rapprochement du rail d'appui (5) contre le déflecteur (7), est introduit par l'entraînement à moteur, par l'arrière dans un orifice de centrage (11) du déflecteur (7), de sorte que le goujon de centrage (10) est centré dans le déflecteur (7) dans le sens de la hauteur et dans le sens latéral du véhicule (1).

3. Installation d'actionnement selon la revendication 1 ou 2,
**caractérisée en ce que**
l'entraînement à moteur comporte deux leviers de charnière (13, 14) reliés par une articulation de charnière (15) et parmi ces leviers, un levier de charnière (14) est relié de manière pivotante à sa zone d'extrémité dirigée vers l'arrière à partir de l'articulation de charnière (15), autour d'un axe transversal (16) du véhicule réalisé dans la zone arrière du rail de guidage (4), et l'autre levier de charnière (13) est monté pivotant dans sa zone d'extrémité dirigée vers l'avant à partir de l'articulation de charnière (15) autour d'un axe de pivotement (12) à la zone arrière du goujon de centrage (10), l'axe de l'articulation de charnière (15) et l'axe de pivotement (12) étant parallèles à l'axe transversal (16) du véhicule.

4. Installation d'actionnement selon la revendication 3,
**caractérisée en ce que**
l'entraînement à moteur comporte deux leviers de transmission de force (18, 19) reliés de manière pivotante autour d'un axe transversal au véhicule (17), ces leviers étant articulés respectivement pour leurs zones d'extrémité autour d'un axe de levier (20, 21) dirigé dans la direction transversale du véhicule d'une part à la zone médiane à l'un (13) des deux leviers de charnière (13, 14) et d'autre part à la zone médiane à l'autre (14) des deux leviers de charnière (13, 14).

5. Installation d'actionnement selon la revendication 4,
**caractérisée en ce que**
juste avant d'atteindre la position de fermeture du rail d'appui (5), les droites de liaison idéales passant par les axes d'articulation (12, 15 ou 15, 16) des deux leviers de charnière (13, 14), font entre eux un angle obtus tourné vers le haut et le cas échéant les droites de liaison idéales passant par les axes d'articulation (17, 20 ou 17, 21) des deux leviers de transmission de force (18, 19) font entre eux un angle obtus tourné vers le bas.

6. Installation d'actionnement selon l'une des revendications 4 ou 5,
**caractérisée en ce qu'**
en position de fermeture du rail d'appui (5), les axes d'articulation (12, 15 ou 15, 16) des deux leviers de charnière (13, 14), se trouvent sensiblement sur l'une des droites de liaison idéale passant par tous les axes d'articulation (12, 15, 16) des leviers de charnière (13, 14) en position de point mort ou sensiblement au-delà de la position de point mort, et dans cette position les droites de liaison passant par les axes d'articulation des leviers de charnière, font un angle obtus tourné vers le bas et le cas échéant les droites de liaison idéales passant par les axes d'articulation (17, 20 ou 17, 21) des leviers de transmission de force (18, 19), font un angle obtus tourné vers le bas.

7. Installation d'actionnement selon l'une des revendications 4 à 6,
**caractérisée en ce que**
dans la position de fermeture du rail d'appui (5), une butée prévue sur l'un des deux leviers de charnière (13, 14) ou le cas échéant l'un des deux leviers de transmission de force (18, 19), vient contre un appui de l'autre des deux leviers de charnière (14, 13) ou le cas échéant l'autre des deux leviers de transmission de force (19, 18) ou contre une partie fixe ou réglable.

8. Installation d'actionnement selon l'une des revendications 6 ou 7 en liaison avec la revendication 6,
**caractérisée en ce qu'**
en position de fermeture, le rail d'appui (5) maintient une installation de sécurité des leviers de charnière (13, 14) en position de point mort ou au-delà de cette position.

9. Installation d'actionnement selon la revendication 8,
**caractérisée en ce que**
l'installation de sécurité comporte un levier de transmission (25) et un levier de fixation (26) qui sont reliés de manière pivotante par le levier de charnière avant (13) autour d'un axe transversal (27) au véhicule et le levier de transmission (25) est articulé au niveau de son extrémité libre à un prolongement (28) du levier avant de transmission de force (18), qui dépasse vers le bas l'axe de levier (20) reliant le levier avant de transmission de force (18) au levier avant de charnière (13).

10. Installation d'actionnement selon la revendication 9,
**caractérisée en ce que**
le levier de fixation (26) est articulé au niveau de sa zone médiane autour d'un axe de pivotement (29) dirigé suivant la direction transversale du véhicule, en avant de l'articulation de charnière (15) au levier avant de charnière (13) et avec sa zone d'extrémité dépassant vers le bas et vers l'arrière, en position de fermeture de la partie avant de toit (2) il vient sous l'articulation de charnière (15) et interdit ainsi un mouvement d'actionnement de l'articulation de charnière (15) vers le bas si l'entraînement à moteur est coupé.

11. Installation d'actionnement selon l'une des revendications 2 à 10,
**caractérisée en ce que**
le rail d'appui (5) est réglable de façon limitée par des butées par rapport au goujon de centrage (10).
